# EUROPEAN PATENT APPLICATION

(11) **EP 2 561 914 A1**
(43) Date of publication of application: **27.02.2013**
(21) Application number: 12180478.5
(22) Date of filing: 14.08.2012
(51) Int. Cl.: B01D 46/00, F02C 6/00, F25J 3/04

(54) **Filtration apparatus with reverse pulse cleaning and power plant including the same**

(30) Priority: 26.08.2011 US 201113219260
(71) Applicant: General Electric Company, Schenectady, NY 12345 (US)
(72) Inventor: Saha, Rajarshi, 560066 Banagalore, Karnataka (IN); Chillar, Rahul Jaikaran, Atlanta, GA Georgia 30339-8402 (US); Rajesh, Prabhakaran Saraswathi, 560066 Bangalore, Karnataka (IN)
(74) Representative: Cleary, Fidelma

(57) **Abstract**

A pulse filtration apparatus (20) of a power plant (10) including an air separation unit (ASU) (30) and a gas turbine engine (40) is provided. The apparatus (20) includes a conduit (50) to transmit fluid from the ASU (30) to a combustor (42) of the gas turbine engine (40) and a tap (60). The tap (60) includes a first end (601) fluidly coupled to the conduit (50), a second end (602) opposite the first end (601) and fluidly coupled to components of a filter housing (70) disposed upstream from a compressor (41) of the gas turbine engine (40) and a main member (603) fluidly interposed between the first and second ends (601, 602). The tap (60) is configured to remove fluid from the conduit (50) and to transmit the removed fluid to the components of the filter housing (70).

## Description

### BACKGROUND OF THE INVENTION

The subject matter disclosed herein relates to a pulse filtration apparatus and, more particularly, a pulse filtration apparatus using nitrogen.

Conventional pulse filters typically use a portion of gas turbine compressor discharge air as a pulsating fluid for cleaning filter elements of a filter housing disposed upstream from the compressor. The compressed air is extracted from the gas turbine compressor and passed through an air processing unit (APU), which is used to improve a quality of the compressed air. This configuration is a costly design, however, in terms of the need for the APU component and the loss of the energy associated with the compressed air. In addition, due to the high cost associated with compressed air removal, pulsation frequency is often reduced.

### BRIEF DESCRIPTION OF THE INVENTION

According to one aspect of the invention, a pulse filtration apparatus of a power plant including an air separation unit (ASU) and a gas turbine engine is provided. The apparatus includes a conduit to transmit fluid from the ASU to a combustor of the gas turbine engine and a tap. The tap includes a first end fluidly coupled to the conduit, a second end opposite the first end and fluidly coupled to components of a filter housing disposed upstream from a compressor of the gas turbine engine and a main member fluidly interposed between the first and second ends. The tap is configured to remove fluid from the conduit and to transmit the removed fluid to the components of the filter housing.

According to another aspect of the invention, a power plant is provided and includes an air separation unit (ASU), a gas turbine engine, including a compressor to compress inlet air, a combustor to combust the compressed inlet air along with fuel and a turbine section, which is receptive of products of the combustion for power generation operations, and the pulse filtration apparatus as described above. According to another aspect of the invention, a method of operating a power plant is provided and includes transmitting a fluid including nitrogen along a conduit from an air separation unit to a combustor of a gas turbine engine, removing a quantity of the fluid from the conduit and transmitting the quantity of the removed fluid to a filter housing disposed upstream from the gas turbine engine.

These and other advantages and features will become more apparent from the following description taken in conjunction with the drawings.

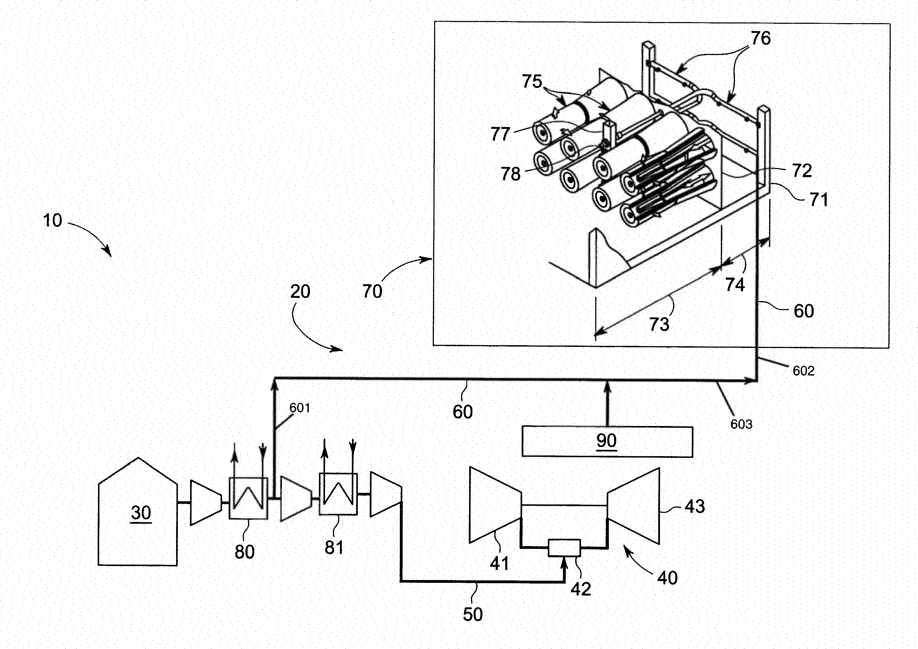

### BRIEF DESCRIPTION OF THE DRAWING

Embodiments of the present invention will now be described, by way of example only, with reference to the accompanying drawings in which:
The sole figure is a schematic diagram of a power plant including a pulse filtration apparatus.
The detailed description explains embodiments of the invention, together with advantages and features, by way of example with reference to the drawings.

### DETAILED DESCRIPTION OF THE INVENTION

With reference to the sole figure, a portion of a power plant 10 is provided and may be, for example, an internal gasification combined cycle (IGCC) power plant. The power plant 10 includes a pulse filtration apparatus 20 by which filter elements of the power plant 10 may be cleaned.

The pulse filtration apparatus 20 includes an air separation unit (ASU) 30 into which a supply of air and other particulate matter is provided and from which a supply of fluid is output. This fluid may include nitrogen (N₂). The pulse filtration apparatus 20 further including a gas turbine engine 40. The gas turbine engine 40 includes a compressor 41 to compress inlet air, which has been filtered by the filter elements of the power plant 10 as will be described below, a combustor 42 to combust the compressed inlet air along with a supply of fuel and a turbine section 43, which is receptive of products of the combustion for power generation operations.

The pulse filtration apparatus 20 further includes a conduit 50 by which the fluid output from the ASU 30 (i.e., the nitrogen) is transmitted from the ASU 30 to the combustor 42, a tap 60 and a filter housing 70. The tap 60 includes a first end 601, which is fluidly coupled to the conduit 50, a second end 602 opposite the first end 601, which is fluidly coupled to components of the filter housing 70 as will be described below, and a main member 603 fluidly interposed between the first end 601 and the second end 602. The tap 60 is configured to remove a quantity of the fluid from the conduit 50 at the first end 601 and to transmit the quantity of the fluid along the main member 603 and the second end 602 to the filter housing 70. The filter housing 70 is disposed upstream from the compressor 41 to filter and clean the inlet air.

At least first and second heat transfer elements, such as first and second intercoolers 80 and 81 may be disposed in series with a group of compressors operably disposed along the conduit 50 to cool the fluid transmitted from the ASU 30 to the combustor 42. In accordance with embodiments, the first end 601 of the tap 60 is configured to remove the fluid from the conduit 50 downstream from the first intercooler 80 and upstream from the second intercooler 81. In addition, an accumulation unit 90 may be disposed along any one of the first end 601, the second end 602 or the main member 603 of the tap 60 to accumulate nitrogen therein such that the accumulated nitrogen can be supplied to the filter housing 70 and to act as a backup system if necessary. In accordance with embodiments, the accumulation unit 90 supplies the nitrogen to the filter housing 70 when a predefined quantity of the fluid is unavailable for removal from the conduit 50 and, to this end, the accumulation unit 90 may be sized for up to about 5 or more days worth of nitrogen supplies.

The components of the filter housing 70 include a housing structure 71 including a tubesheet 72 having openings formed therein. The tubesheet 72 extends through the housing structure 71 to defme a first, dirty air chamber 73 and a second, clean air chamber 74 within the housing structure 71. The filter housing 70 further includes an array of filter elements 75 and an array of blowpipes 76. Each filter element 75 is disposed in a corresponding one of the openings of the tubesheet 72 to filter air flowing from the first chamber 73 to the second chamber 74 whereby the filtered air can then proceed to the compressor 41. Each blowpipe 76 respectively corresponds to one of the filter elements 75 and is coupled to the second end 602 of the tap 60. Each blowpipe 76 is thus configured to supply the fluid removed from the conduit 50 to a corresponding one of the filter elements 75.

The filter housing 70 still further includes a compressed air manifold 77 and a manifold valve assembly 78. The compressed air manifold 77 is coupled to each blowpipe 76 and is thus configured to supply compressed air thereto. The manifold valve assembly 78 controls the supply of the compressed air to each blowpipe 76 independently so that each filter element 75 can be cleaned independently or in accordance with a predefined cleaning algorithm.

With this construction, the fluid removed from the conduit 50 and/or the accumulated nitrogen in the accumulation unit 90 and the compressed air supplied by the compressed air manifold 77 are injected into the filter elements 75 at high speed. Dust particles and/or other particulate matter that have collected on the filter media of the filter elements 75 are thus removed from the filter media such that filtration of the inlet air proceeding to the compressor 41 can be achieved.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A pulse filtration apparatus (20) of a power plant (10) including an air separation unit (ASU) (30) and a gas turbine engine (40), the apparatus (20) comprising:
a conduit (50) to transmit fluid from the ASU (30) to a combustor (42) of the gas turbine engine (40); and
a tap (60), including a first end (601) fluidly coupled to the conduit (50), a second end (602) opposite the first end (601) and fluidly coupled to components of a filter housing (70) disposed upstream from a compressor (41) of the gas turbine engine (40) and a main member (603) fluidly interposed between the first and second ends (601) and (602),
the tap (60) being configured to remove fluid from the conduit (50) and to transmit the removed fluid to the components of the filter housing (70).

2. The apparatus (20) according to claim 1, further comprising first and second intercoolers (80, 81) disposed in series along the conduit (50).

3. The apparatus (20) according to claim 2, wherein the tap (60) is configured to remove the fluid from the conduit (50) downstream from the first intercooler (80).

4. The apparatus (20) according to any of claims 1 to 3, wherein the fluid removed from the conduit (50) comprises nitrogen (N₂).

5. The apparatus (20) according to any of claims 1 to 4, further comprising an accumulation unit (90) operably disposed along the tap (60) to accumulate nitrogen therein for supplying nitrogen to the filter housing (70).

6. The apparatus (20) according to claim 5, wherein the accumulation unit (90) supplies nitrogen to the filter housing (70) when a predefmed quantity of the fluid is unavailable for removal from the conduit (50).

7. The apparatus (20) according to any preceding claim, wherein the components of the filter housing (70) comprise:
a housing structure (71) including a tubesheet (72) having openings formed therein, the tubesheet (72) defming first and second chambers (73, 74) within the housing structure (71);
an array of filter elements (75) disposed in the tubesheet openings to filter air flowing from the first to the second chambers (73, 74); and
an array of blowpipes (76) respectively corresponding to the array of filter elements (75), which are each coupled to the tap(60) to supply the fluid to each of the array of filter elements (75).

8. The apparatus (20) according to claim 7, wherein the filter housing (70) further comprises:
a compressed air manifold (77) coupled to each of the array of blowpipes (76) to supply compressed air thereto; and
a manifold valve assembly (78) to control the supply of the compressed air to each of the array of blowpipes (76) independently.

9. A power plant (10), comprising:
an air separation unit (ASU) (30);
a gas turbine engine (40), including a compressor (41) to compress inlet air, a combustor (42) to combust the compressed inlet air along with fuel and a turbine section (43), which is receptive of products of the combustion for power generation operations; and
the pulse filtration apparatus (20) of any of claims 1 to 8.

10. A method of operating a power plant (10), comprising:
transmitting a fluid including nitrogen along a conduit (50) from an air separation unit (30) to a combustor (42) of a gas turbine engine (40);
removing a quantity of the fluid from the conduit (50); and
transmitting the quantity of the removed fluid to a filter housing (70) disposed upstream from the gas turbine engine (40).

11. The method according to claim 10, further comprising cooling the fluid at first and second intercoolers (80,81) disposed in series along the conduit (50),
wherein the removing comprising removing the quantity of the fluid from the conduit (50) downstream from the first intercooler (80).

12. The method according to claim 10 or 11, further comprising:
accumulating nitrogen in an accumulation unit (90); and
supplying the accumulated nitrogen to the filter housing (70).

13. The method according to any of claims 10 to 12, further comprising controlling a distribution of the quantity of the removed fluid in the filter housing (70).
